# EUROPEAN PATENT APPLICATION

(11) **EP 4 800 379 A1**
(43) Date of publication of application: **02.09.2026**
(21) Application number: 24882013.6
(22) Date of filing: 28.08.2024
(51) Int. Cl.: G01N 21/88, G06T 7/00

(54) **METHOD FOR BUILDING LEARNING MODEL AND INSPECTION DEVICE**

(30) Priority: 25.10.2023 JP 2023183015
(71) Applicant: Astemo, Ltd., Chiyoda-ku, Tokyo 1000004 (JP)
(72) Inventor: KOBAYASHI, Yoshihiko, Hitachinaka-shi, Ibaraki 312-8503 (JP); FUJIOKA, Takahiro, Hitachinaka-shi, Ibaraki 312-8503 (JP); WATANABE, Takashi, Hitachinaka-shi, Ibaraki 312-8503 (JP); ICHINOSE, Masatoshi, Hitachinaka-shi, Ibaraki 312-8503 (JP)
(74) Representative: Hoffmann Eitle
(86) International application number: PCT/JP2024/030639
(87) International publication number: WO 2025/088896

(57) **Abstract**

From an inspection of an object to be inspected using a learning model, a result indicating a non-detection of a defective product that is within a range of a feature amount of a defect or an over-detection (a false call) of a non-defective product outside the range is acquired, and the learning model is reconstructed by updating a distribution of the feature amount of the defect based on the result.

## Description

### TECHNICAL FIELD

The present invention relates to a method of building a learning model and an inspection device.

### BACKGROUND ART

In Patent Literature 1, there is disclosed a technology of inspecting for presence or absence of a defect on a surface of an object to be inspected, and determining whether or not the object to be inspected passes or fails, based on a photographed image of the surface of the object to be inspected, and results of machine learning performed by using a plurality of artificial defect images.

### CITATION LIST

### PATENT LITERATURE

PTL 1: JP 2011-214903 A

### SUMMARY OF INVENTION

### TECHNICAL PROBLEM

In the above-mentioned related art, even when a human looks at a distribution of a feature amount of a defect obtained from a photographed image and sets a boundary between non-defective products and defective products or the distribution of defective products, in machine learning, the pass/fail determination may be performed by also taking into account a feature amount other than the set feature amount. As a result, a discrepancy between a range of the feature amount of the defect to be detected and a range of the feature amount in which the trained model determines a defect to exist may occur, which may result in a non-detection of a defect or an over-detection (a false call) of a non-defective product.

One object of the present invention is to provide a method of building a learning model and an inspection device with which a non-detection of defects and an over-detection of non-defective products can be reduced.

### SOLUTION TO PROBLEM

According to one embodiment of the present invention, there is provided a method of building a learning model, the method including: generating an artificial defect based on a feature amount of a defect to be inspected for, a range of a feature amount for generating the artificial defect, and a distribution of the feature amount; building a learning model which has learned the artificial defect; acquiring, from an inspection of the object to be inspected using the learning model, a result indicating a non-detection of a defective product that is within a range of the feature amount of the defect or an over-detection of a non-defective product outside the range; and reconstructing the learning model by updating the distribution based on the result.

According to the one embodiment of the present invention, the non-detection of defects and the over-detection of non-defective products can be reduced.

### BRIEF DESCRIPTION OF DRAWINGS

Fig. 1 is a schematic diagram of an appearance inspection device (1) according to a first embodiment of the present invention.
Figs. 2 are examples of an initial shape (E₁) and a final shape (E₂) of an ellipse.
Fig. 3 is an example of a concept of how a blowhole-type defect element is generated by using the ellipses illustrated in Figs. 2.
Fig. 4 is an example of a batch image of a blowhole-type defect element.
Fig. 5 is another example of a concept of how a cavity and scratch-type defect element is generated by using the ellipses illustrated in Figs. 2.
Figs. 6 are examples of patch images of a cavity-type defect element and a scratch-type defect element.
Figs. 7 are other examples of the initial shape (E1) and the final shape (E2) of an ellipse.
Figs. 8 are graphs for showing a method of setting a distribution of a feature amount in the first embodiment.
Fig. 9 is a flowchart for illustrating a flow of a method of building a learning model in the first embodiment.
Figs. 10 are graphs for showing a method of updating the distribution of the feature amount in the first embodiment.
Figs. 11 are graphs for showing a method of updating the distribution of the feature amount in the first embodiment.
Figs. 12 are graphs for showing a method of updating a distribution of a feature amount in a second embodiment of the present invention.
Figs. 13 are graph for showing a method of updating a distribution of a feature amount in a third embodiment of the present invention.
Figs. 14 are graphs for showing a method of updating the distribution of the feature amount in the third embodiment.
Figs. 15 are graphs for showing a method of updating a distribution of a feature amount in a fourth embodiment of the present invention.
Figs. 16 are graphs for showing a method of updating the distribution of the feature amount in the fourth embodiment.
Fig. 17 is a graph for showing a method of setting a distribution of a feature amount in a fifth embodiment of the present invention.
Figs. 18 are graphs for showing a method of updating the distribution of the feature amount in the fifth embodiment.
Figs. 19 are graphs for showing a method of updating the distribution of the feature amount in the fifth embodiment.
Figs. 20 are examples of equipment data waveforms during normal operation and at the time when a fault occurs.
Fig. 21 is a graph for showing a machine learning method in a sixth embodiment of the present invention.
Figs. 22 are graphs for showing a method of setting a distribution of a feature amount and a method of generating artificial fault waveforms in the sixth embodiment.

### DESCRIPTION OF EMBODIMENTS

### [First Embodiment]

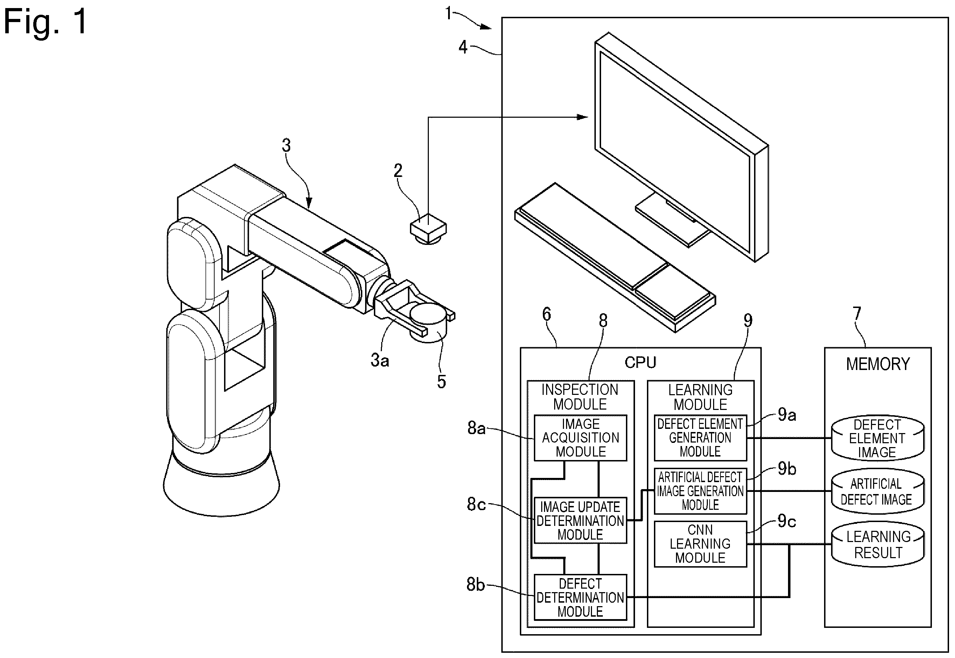

Fig. 1 is a schematic diagram of an appearance inspection device 1 according to a first embodiment of the present invention.

The appearance inspection device 1 according to the first embodiment includes a camera 2, a robot 3, and a computer 4. The camera 2 captures images of a surface of an engine piston material or a finished engine piston product (hereinafter simply referred to as "piston") 5, which is an object to be inspected. The robot 3 is an articulated robot, and includes a hand 3a that holds the piston 5.

The computer 4 is, for example, a personal computer, and includes a CPU 6 and a memory 7. The CPU 6 includes an inspection module 8 and a learning module 9. The inspection module 8 includes an acquisition module 8a, a defect determination module 8b, and an image update determination module 8c. The acquisition module 8a acquires a photographed image captured by the camera 2. The defect determination module 8b inspects for whether or not there is a scratch or a defect on the surface of the piston 5 based on the photographed image acquired by the acquisition module 8a and a learning result stored in the memory 7 (products having a scratch or a defect are determined as being "NG," and products without a scratch or a defect are determined as being "OK"). The image update determination module 8c is described later.

The learning module 9 includes a defect element generation module 9a, an artificial defect image generation module 9b, and a CNN learning module 9c. The defect element generation module 9a generates defect element images. Any method may be adopted as a method of generating defect element images. In the first embodiment, the defect element images are generated by superimposing a plurality of predetermined shapes. The artificial defect image generation module 9b generates an artificial defect image, which is a pseudo defective product sample image, by combining the defect element images into a surface image of a sample product equivalent to the piston 5. The CNN learning module 9c performs machine learning by using a plurality of the artificial defect images. The machine learning is learning which uses a neural network. In the first embodiment, deep learning using a convolutional neural network (CNN) model is adopted.

The memory 7 stores a plurality of the defect element images generated by the defect element generation module 9a, a plurality of the artificial defect images generated by the artificial defect image generation module 9b, and the result of learning by the CNN learning module 9c.

Next, a method of generating the defect element images by the defect element generation module 9a is described.

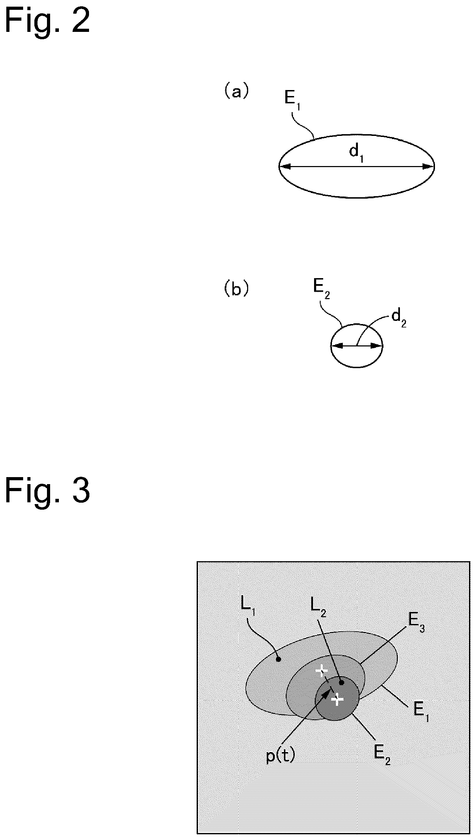

The defect element generation module 9a generates the defect element images by superimposing a plurality of basic graphics that differ from one another in size and brightness. In the first embodiment, the basic graphics are ellipses, and the defect element images are generated by changing input parameters. Figs. 2 are examples of an initial shape E₁ and a final shape E₂ of the ellipse. The initial shape E₁ of Fig. 2(a) has a major axis d₁ and an aspect ratio a₁. Meanwhile, the final shape E₂ of Fig. 2(b) has a major axis d₂ and an aspect ratio a₂.

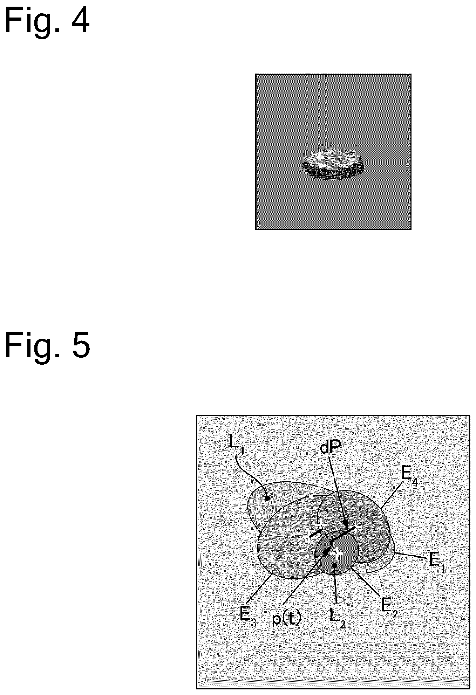

The defect elements are generated by generating one or a plurality of intermediate shapes which are complementary between the initial shape E₁ and the final shape E₂, and overlapping each shape. Fig. 3 is an example of a concept of how a blowhole-type defect element is generated by using the ellipses illustrated in Figs. 2. The input parameters are a major axis (first parameter) "d", a brightness (second parameter) L, a drawing path (third parameter) p(t), a rotation angle θ, and a number of ellipses "n". The drawing path p(t) is expressed as a straight line, and the number of ellipses n=3. As a result, a patch image of a blowhole-type defect element can be generated, as illustrated in Fig. 4.

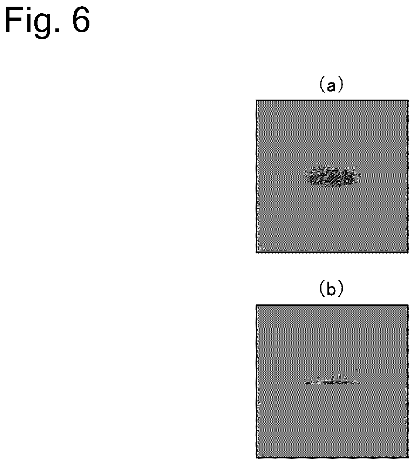

Fig. 5 is a diagram for illustrating a concept of how a cavity and scratch-type defect element is generated by using the ellipses illustrated in Figs. 2. The input parameters are the major axis "d", the brightness L, the drawing path p(t), a random rotation angle dθ, a random coordinate deviation amount dP, and the number of ellipses "n". The drawing path p(t) is expressed as a straight line, and the number of ellipses n=4. Through randomly rotating/translating the basic graphics, it is possible to generate a patch image of a cavity-type defect element, as illustrated in Fig. 6(a), and a patch image of a scratch-type defect element, as illustrated in Fig. 6(b).

The same applies to a patch image of a cavity-type defect element.

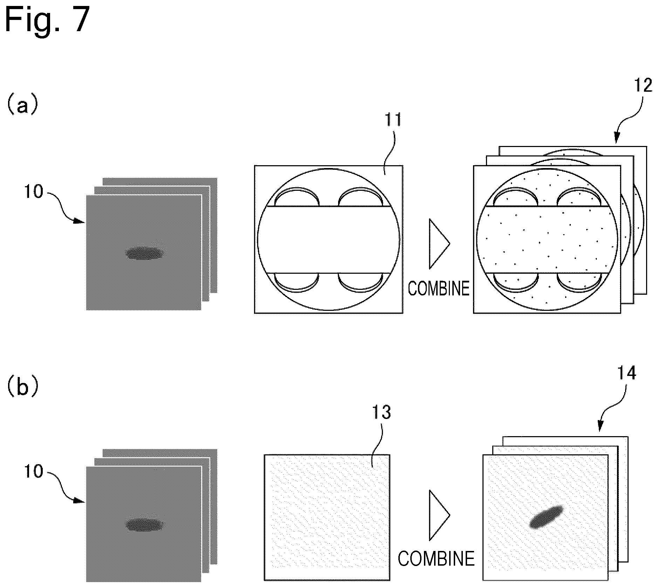

Figs. 7 are diagrams for illustrating a method of generating an artificial defect image by the artificial defect image generation module 9b, in which Fig. 7(a) shows a method of generating the artificial defect image, and Fig. 7(b) shows a method of generating a patch image of the artificial defect.

As illustrated in Fig. 7(a), a plurality of artificial defect images 12 can be generated by combining a plurality of patch images 10 of defect elements with an overall view 11 of the piston 5 as a background image. Meanwhile, as illustrated in Fig. 7(b), a plurality of patch images 14 of artificial defects can be generated by combining a plurality of patch images 10 of defect elements with a patch image 13 of the piston 5 as a background image.

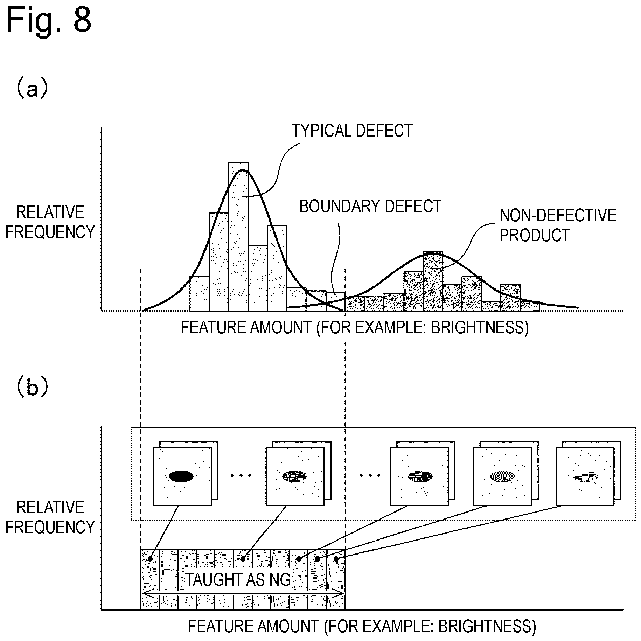

To generate an artificial defect image requires selecting a feature amount of the defect, setting the range of the feature amount of the defect (NG range), and setting the distribution of the number of samples in the NG range. In the case of inspecting the appearance, at least one of the image brightness, the size, or the shape of the defect is used as the feature amount of the defect. Fig. 8(a) is an example of a feature distribution obtained when brightness is used as the feature amount of the photographed image. In this example, the brightness of typical defects is distributed in a range of 70 or less, and the brightness of non-defective products is distributed in a range above 70. The boundary between non-defective products and defects in terms of brightness is 70, and hence as shown in Fig. 8(b), a brightness range of from 0 to 70 is set as the range of the feature amount of the defect (NG range), and the brightness range of above 70 is set as the range of the feature amount of the non-defective product (OK range). Further, it is assumed that the number of samples (relative frequency) at each brightness within the NG range is, for example, a fixed distribution. The artificial defect image generation module 9b generates artificial defect images based on the defect feature amount, the NG range, and the distribution of the number of samples in the NG range that have been set in advance (hereinafter simply referred to as the distribution of the feature amount).

The CNN learning module 9c trains the neural network through use of defect images from the plurality of artificial defect images and the plurality of patch images of artificial defects generated by the artificial defect image generation module 9b. In the machine learning, images generated by the artificial defect image generation module 9b are used for the training, instead of feature amounts set by a human, and hence the range of the feature amount that the trained model uses to determine a defect may differ from the NG range that a human wants to detect. This may result in defects not being detected or non-defective products being over-detected (hereinafter also referred to as "false call").

In view of the above, in the first embodiment, a result indicating a non-detection of a defective product in the NG range and a false call of a non-defective product outside the range is acquired from an inspection of the object to be inspected using a learning model, and based on the result, the initially set distribution of the feature amount is updated to build the learning model.

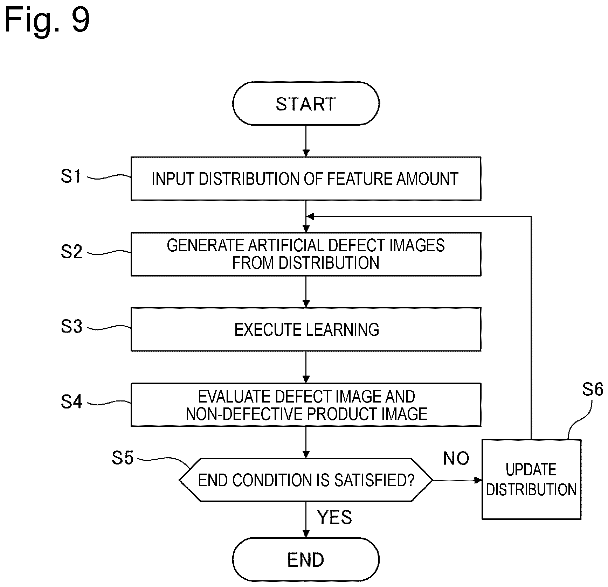

Fig. 9 is a flowchart for illustrating a flow of a method of building the learning model of the first embodiment.

In Step S1, the distribution of the feature amount set in advance is input to the artificial defect image generation module 9b.

In Step S2, the artificial defect image generation module 9b generates a plurality of artificial defect images based on the input distribution of the feature amount.

In Step S3, the CNN learning module 9c executes deep learning (machine learning) based on the generated plurality of artificial defect images to create a CNN model.

In Step S4, the defect determination module 8b evaluates whether or not the photographed image is a defect image (NG) or a non-defective product image (OK) based on the created CNN model.

In Step S5, the image update determination module 8c determines whether or not a condition for ending updating of the artificial defect image is satisfied. When it is determined that the end condition is satisfied ("YES"), the process ends, and when it is determined that the end condition is not satisfied ("NO"), the process advances to Step S6. The determination as to whether or not the end condition is satisfied is performed by the image update determination module 8c evaluating whether the photographed image is NG or OK based on a predetermined algorithm different from the pass/fail determination using the CNN model by the defect determination module 8b, and comparing the obtained evaluation with the evaluation by the defect determination module 8b. When the evaluation by the image update determination module 8c is NG and the evaluation by the defect determination module 8b is OK, the evaluation by the defect determination module 8b is determined as having not detected a defect image (hereinafter also referred to as "non-detection"). Meanwhile, when the evaluation by the image update determination module 8c is OK and the evaluation by the defect determination module 8b is NG, the evaluation by the defect determination module 8b is determined as being a false call of a non-defective product image (hereinafter also referred to as "false call"). In Step S5, for example, the condition for ending updating of the artificial defect image is determined to be satisfied when the non-detection rate by the defect determination module 8b is 0% and the false call rate is less than t%.

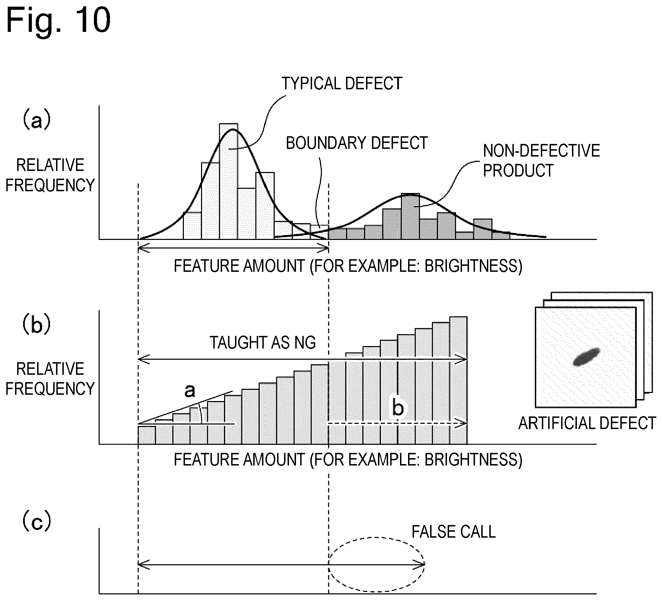

In Step S6, the artificial defect image generation module 9b updates the distribution of the feature amount, and the process advances to Step S2. In Step S2, a plurality of artificial defect images are generated based on the updated distribution of the feature amount to reduce non-detections and false calls. The method of updating the distribution of the feature amount is described below. In the first embodiment, as the method of reducing non-detections or false calls, as shown in Fig. 10(b), a method of adjusting a parameter "a" (slope: a≥0) for changing a weighting of the number of samples (relative frequency) near the boundary of the feature amount, and a method of adjusting a parameter "b" (distance) for changing the range of the distribution of the feature amount to be detected are used (the initial distribution of the feature amount shown in Fig. 8(b) is set to have a=0 and b=0).

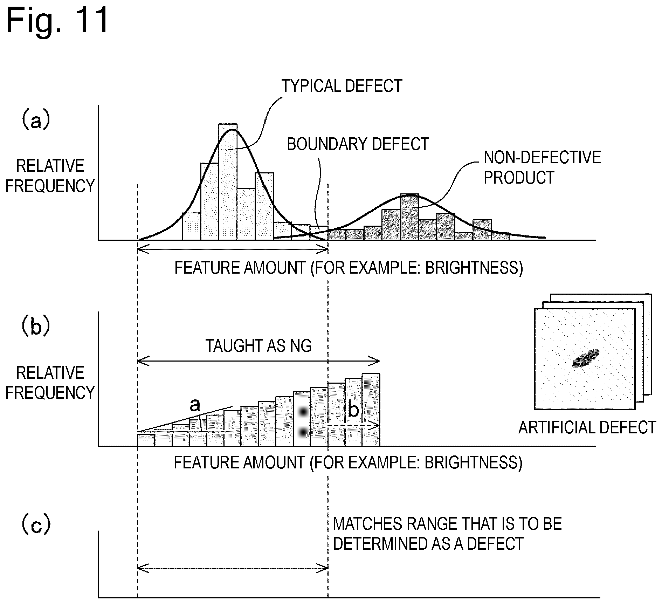

As shown in Fig. 10(c), excessive teaching of artificial defects having feature amounts similar to those of non-defective products in CNN training results in an increase in false calls. In this case, the value of at least one of the parameter "a" or the parameter "b" is reduced, as shown in Figs. 11. That is, the weighting near the feature amount boundary is reduced, or the NG range is narrowed. Meanwhile, when defects near the feature amount cannot be detected in CNN training, the number of non-detections increases. In this case, the value of at least one of the parameter "a" or the parameter "b" is increased. That is, the weighting near the feature amount boundary is increased, or the NG range is expanded.

As described above, in the first embodiment, a result indicating a non-detection of a defective product in the range of the feature amount of a defect or an over-detection (false call) of a non-defective product outside the range is acquired from the inspection of the object to be inspected using the learning model (Step S4 of Fig. 9), and based on the result, the distribution of the feature amount is updated to build the learning model (Step S6 → Step S2 of Fig. 9). As a result, the distribution of the feature amount can be updated so that the NG range that the human wants to determine as a defect matches the NG range of CNN learning (deep learning). As a result, it becomes possible to build a learning model that can reduce the non-detection of defects and the false calls of non-defective products.

In the first embodiment, the distribution of the feature amount is updated by increasing the number of samples near the boundary of the feature amount (Fig. 10(b)). This improves the capability to detect the feature amount boundary set by humans. In addition, the distribution of the feature amount is updated by updating a slope (parameter "a") of the generated amount of the artificial defects relative to a change in the feature amount so that the amount of the artificial defects generated near the boundary of the feature amount increases. In other words, the slope of the generated amount of artificial defects relative to the change in the feature amount is updated so that the generated amount of the artificial defects is lower further away from the boundary of the feature amount. This increases the weighting of the number of samples near the boundary of the feature amount, and hence the capability to detect the feature amount boundary set by a human is further increased.

Further, the distribution of the feature amount is updated by expanding or narrowing the NG range (parameter "b") so that the non-detection of defects and false calls of non-defective products are reduced. This can improve the consistency between the human-set feature amount boundary and determination by machine learning. For example, when the number of non-detections of defective products increases, the NG range is expanded to within the current OK range. This can reduce non-detected defects. Meanwhile, when the number of false calls of non-defective products increases, the NG range is narrowed from the current NG range. This can reduce false calls of non-defective products.

The learning model shown in the first embodiment is a method of building a learning model to be used in the appearance inspection device 1. The artificial defect is a synthetic defect image obtained by combining an image of an artificial defect with a non-defective product image. The feature amount is at least one of a brightness, a size, or a shape of the image of the artificial defect. As a result, the appearance inspection device 1 can accurately determine the presence or absence of a scratch or a defect on the surface of the object to be detected.

### [Second Embodiment]

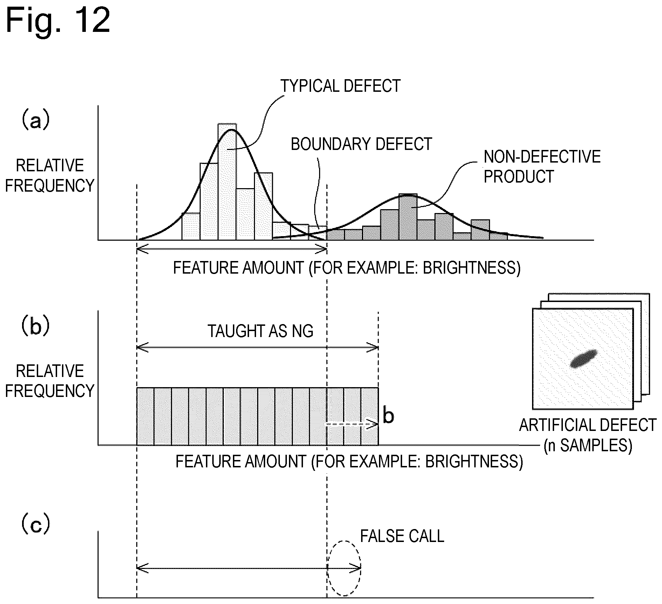

As shown in Figs. 12, a second embodiment of the present invention differs from the first embodiment in that, as the parameter used to update the distribution of the feature amount, only the parameter "b", which expands or narrows the NG range, is adjusted. That is, the distribution of the number of samples within the NG range is constant regardless of brightness, as shown in Fig. 8(b). The method of adjusting the parameter "b" is the same as in the first embodiment. In this way, through use of only one parameter, modification of the distribution is easier than in the first embodiment.

### [Third Embodiment]

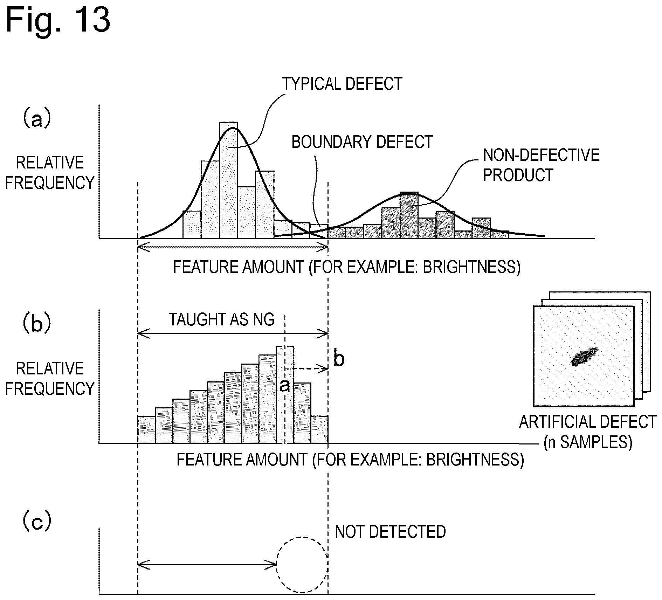

In a third embodiment of the present invention, the distribution of the number of samples within the NG range at the time of generating the initial artificial defect is set to have a mountain-like shape (substantially a triangular shape with an upward convexity), as shown in Figs. 13. As the parameters for updating the feature amount, the method of adjusting the parameter "a" for changing the feature amount having the largest number of samples (relative frequency) (changing the height of the peak of the mountain-like shape), and the method of adjusting the parameter "b" for changing the range of the feature amount that is taught to be NG are used. At the time of updating the feature amount, the mountain-like shape is maintained, and the number of samples within the NG range is kept constant.

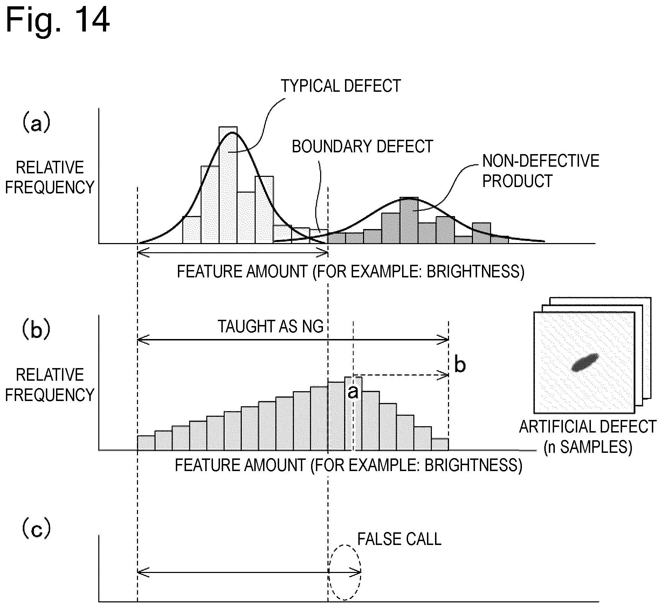

When a defect is not detected during generation of the initial artificial defect, the parameter "a" is increased and the parameter "b" is expanded, as shown in Figs. 14. Meanwhile, although not shown, when a false call of a non-defective product occurs, the parameter "a" is decreased and the parameter "b" is narrowed. The actual distribution of the feature amount is close to a mountain-like shape, and hence, with teaching the distribution of the feature amount in a mountain-like shape, as in the third embodiment, it is possible to improve the detection accuracy of the feature amount boundary and intuitively correct the distribution of the feature amount.

### [Fourth Embodiment]

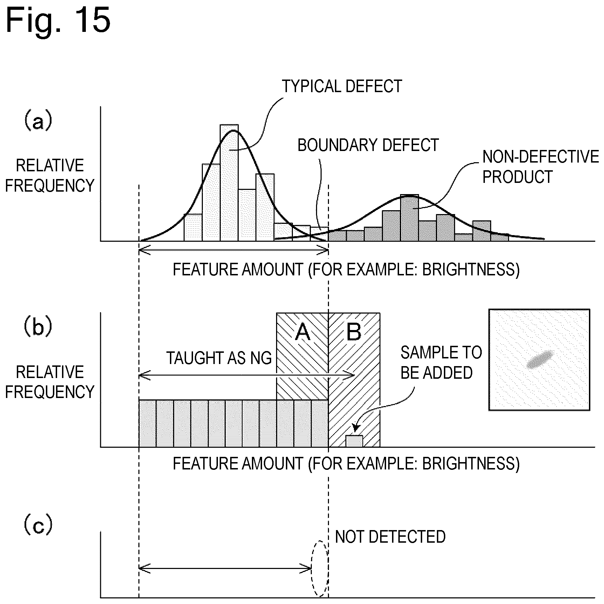

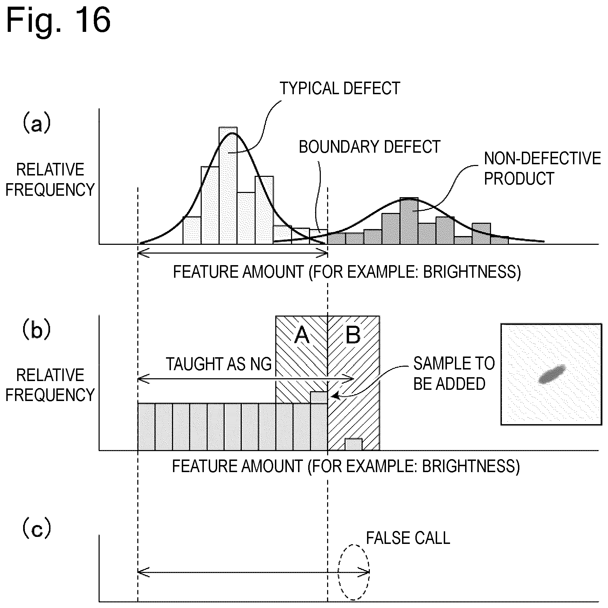

A fourth embodiment of the present invention differs from the first embodiment in that the shape of the distribution of the feature amount is not managed by parameters, but is increased or decreased by one sample at a time based on the learning results. At the time of generating the initial artificial defect, a range A is set on the NG side and a range B is set on the OK side of the defect feature amount boundary, as shown in Fig. 8(b). When there is a non-detection, one artificial defect sample is randomly added from the range B (Fig. 15(b)). Meanwhile, when a false call occurs, one artificial defect sample is added randomly from the range A (Fig. 16(b)). In the fourth embodiment, the correction range is small (one sample at a time) without significantly changing the distribution of the feature amount all at once, and hence the defect determination range of the deep learning can be prevented from fluctuating significantly each time the distribution of the feature amount is updated.

### [Fifth Embodiment]

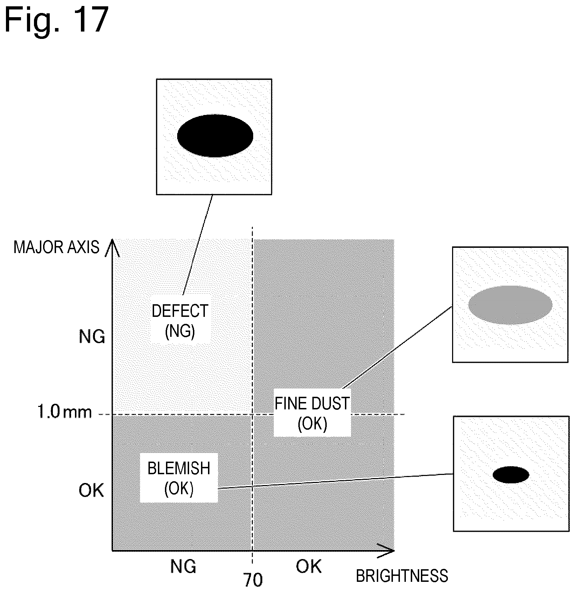

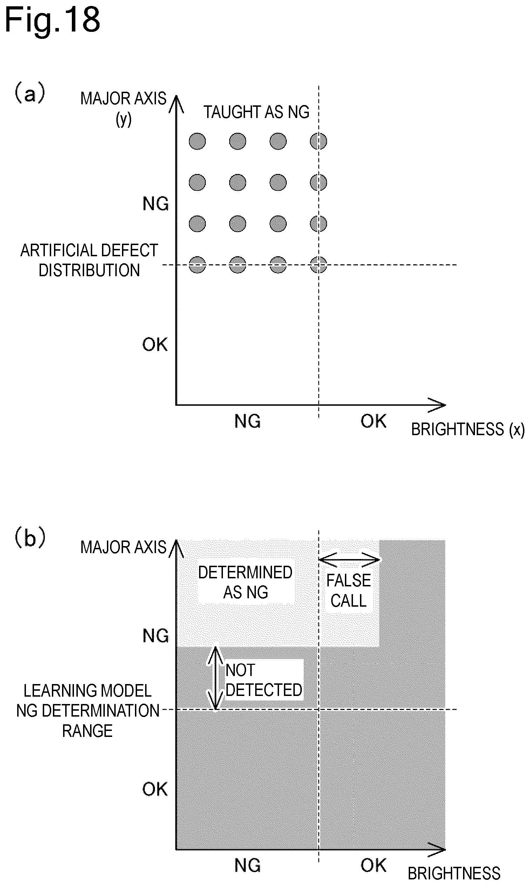

A fifth embodiment of the present invention differs from the first embodiment in that the NG range is determined by using two feature amounts. In the second embodiment, the feature amounts of a defect are the brightness and the major axis of the ellipse used to generate the defect element image. In the example of Fig. 17, the brightness of defects is distributed in a range of 70 or less, and the brightness of non-defective products is distributed in a range above 70. Further, the major axis of defects is distributed in a range of 1.0 mm or more, and the major axis of non-defective products is distributed in a range of less than 1.0 mm. The boundary between defects and non-defective products in terms of the major axis is 1.0 mm, and the boundary between defects and non-defective products in terms of brightness is 70. Accordingly, the range of the feature amount of the defect (NG range) is set as the range in which the major axis is above 1.0 and brightness is from 0 to 70. As shown in Fig. 18(a), the number of samples (relative frequency) within the NG range is set, for example, with a certain distribution. In Fig. 18(a), a distribution "z" of the defect feature amount at the time of generating the initial artificial defect is shown. The size of the circles represents the number of samples, with larger circles indicating a higher number of samples. The horizontal axis "x" is the brightness coordinate, and the vertical axis "y" is the major axis coordinate.

As shown in Fig. 18(b), in the evaluation by the defect determination module 8b based on generation of the initial artificial defect, it is assumed that a non-detection has occurred due to the major axis of the defect, a false call has occurred due to the brightness of the defect. In this case, the distribution "z" can be calculated by using the following expression (1) $Z = {a}_{x} x + {a}_{y} y \left(x\leq {t}_{x}+{b}_{x}, y\geq {t}_{y}+{b}_{y}\right)$

In the expression, bₓ is the distance of the brightness from an initial boundary tₓ, and b_{y} is the distance of the major axis from an initial boundary t_{y}.

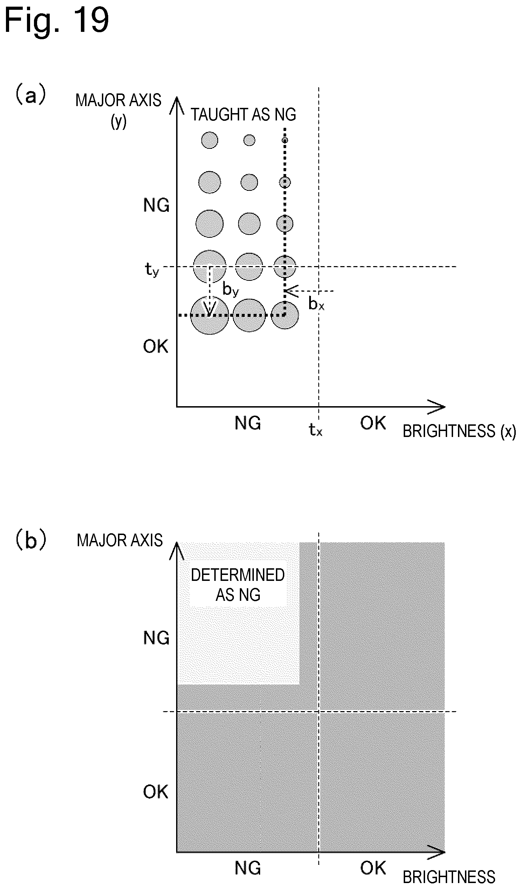

In the expression (1), when there is a non-detection, the parameter "a" and the parameter "b" are increased, and when there is a false call, the parameter "a" and the parameter "b" are decreased to enable reducing the number of non-detections and false calls. For example, in the case as shown in Fig. 18(b), a non-detection has occurred due to the major axis of the defect, and a false call has occurred due to the brightness of the defect, and hence in the expression (1), aₓ and bₓ are decreased and a_{y} and b_{y} are increased. As a result, the range of the major axis expands, and the major axis is weighted more heavily closer to the boundary, while the range of the brightness narrows, and the brightness is weighted less heavily closer to the boundary, as shown in Figs. 19. The distribution "z" is repeatedly updated until the defect range that the human wants to determine as a defect matches the defect range determined by the CNN learning model.

### [Sixth Embodiment]

A sixth embodiment of the present invention is an example of building a machine learning model to be used in an inspection device that inspects an object to be inspected for faults or abnormalities based on waveform data emitted by the object to be inspected. In the sixth embodiment, the object to be inspected is a predetermined piece of production equipment, and predetermined equipment data generated by the piece of equipment is used as the waveform data.

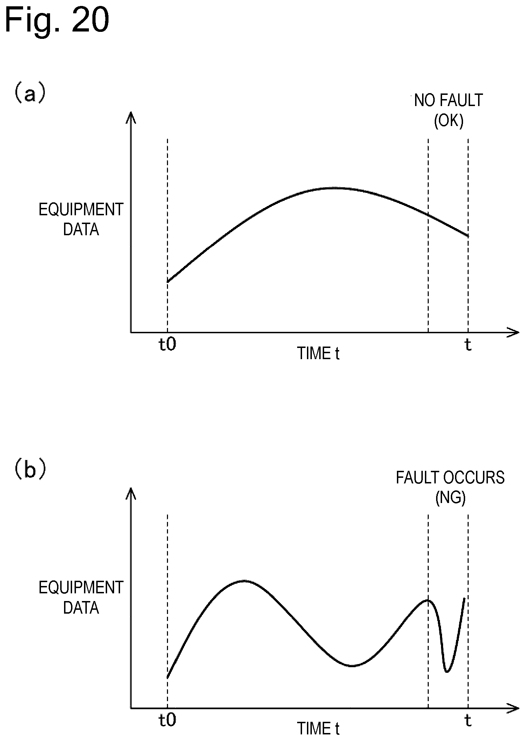

Fig. 20(a) shows the equipment data waveform obtained when the piece of equipment is operating normally from a time t0 to a time t1, and the waveform changes gradually. Meanwhile, Fig. 20(b) shows the equipment data waveform obtained when a fault occurs in the piece of equipment immediately before the time t1, and the fault occurs after the waveform fluctuation (differential) becomes larger. That is, the waveform trends are different when the piece of equipment is operating normally and when a fault occurs, and hence it is possible to predict a fault by using an AI model.

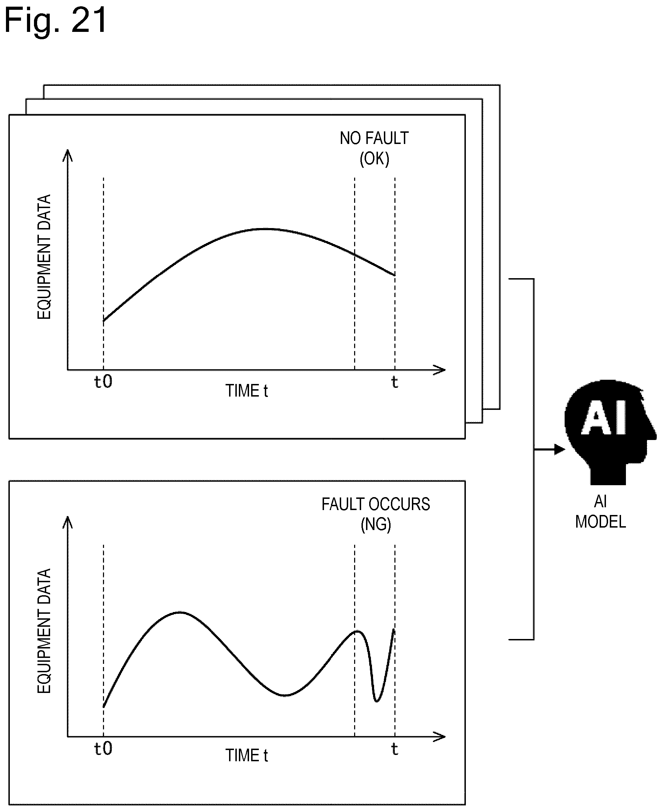

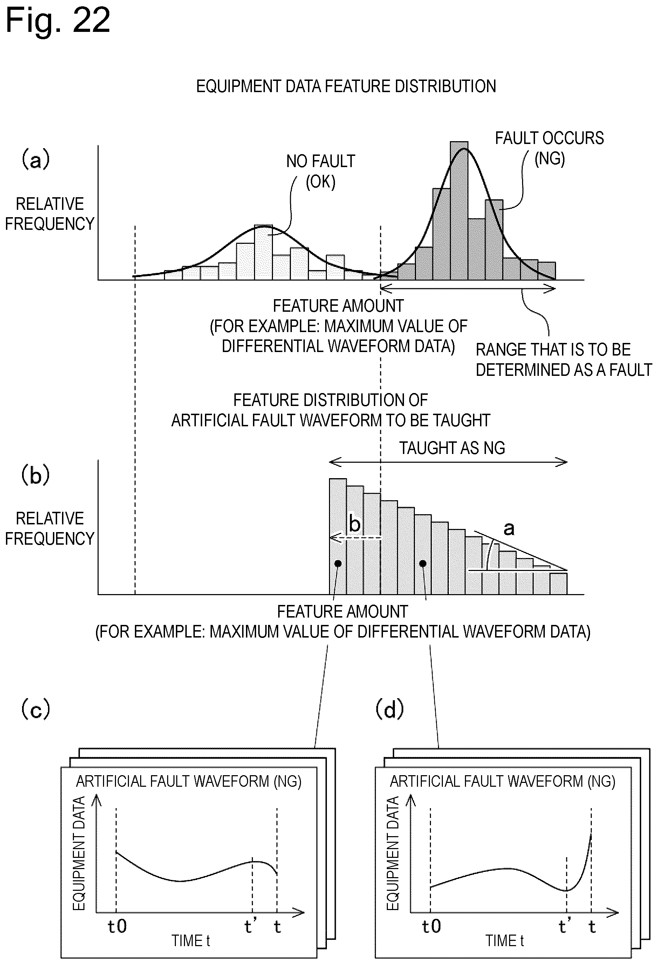

As shown in Fig. 21, the AI model performs machine learning by using equipment data waveforms of during normal operation and of when a fault occurs, and performs fault prediction based on the actual equipment data waveform and the learning results. However, equipment fault is rare, and hence, like in the first embodiment, learning is performed by using an artificial fault waveform, which is an equipment data waveform artificially generated when a fault occurs. Fig. 22(a) is an example of a feature distribution obtained when a feature amount of an equipment data waveform is the maximum value of the differential waveform data. In this example, the maximum value of the differential waveform data is equal to or less than a predetermined value during normal operation, and exceeds the predetermined value when a fault occurs. Accordingly, the predetermined value is set as the boundary, the range equal to or less than the predetermined value is set as the OK range, and the range exceeding the predetermined value is set as the NG range.

The distribution of the number of samples (relative frequency) within the NG range may be constant for each maximum value of the differential waveform data, or may be weighted more heavily closer to the boundary. Like in the first embodiment, as the method of updating the distribution of the maximum value of the differential waveform data (distribution of feature amount) at the time when a fault occurs, the method of adjusting the parameter "a" for changing the weighting of the number of samples near the boundary, and the method of adjusting the parameter "b" for changing the NG range are used, as shown in Fig. 22(b). In the machine learning, artificial fault waveforms are randomly generated and learned so that the increase and decrease is gradual in the period from the time t0 to a time t' and then increases in the period from the time t' to a time t (Fig. 22(c) and Fig. 22(d)). As a result, the artificial fault waveform becomes closer to the equipment data waveform at the time of the fault.

The flow of the method of building the learning model is similar to that in the first embodiment illustrated in Fig. 9, in which it is determined whether or not there is a non-detection or a false call in a fault evaluation based on the AI model, and the distribution of the feature amount is updated so as to eliminate non-detections and false calls. As a result, in a machine learning model used in an inspection device that inspects for faults in production equipment based on waveform data emitted by the production equipment, it is possible to reduce non-detections and false calls of equipment faults.

### [Other Embodiments]

The embodiments of the present invention have been described above. However, the specific configurations of the present invention are not limited to the configurations described in the embodiments. A modification in design and the like without departing from the scope of the gist of the invention are also encompassed in the present invention.

For example, in the first to fifth embodiments, the examples in which the object to be inspected is a piston have been described, but the object to be inspected is not limited to pistons.

In the sixth embodiment, the example in which the object to be inspected is a piece of production equipment has been described, but the object to be inspected may also be other equipment, products, or devices.

The learning results are not limited to those obtained by neural networks or deep learning, and are only required to be those obtained by machine learning.

The present invention is not limited to the embodiments described above, and encompasses various modification examples. For example, the embodiments described above have described the present invention in detail for the ease of understanding, and the present invention is not necessarily limited to a mode that includes all of the configurations described above. A part of the configuration of one embodiment may be replaced with the configuration of another embodiment, and the configuration of one embodiment may be used in combination with the configuration of another embodiment. In each embodiment, another configuration may be added to, deleted from, or replace a part of the configuration of the embodiment.

The present application claims a priority based on Japanese Patent Application No. 2023-183015 filed on October 25, 2023. All disclosed contents including Specification, Scope of Claims, Drawings, and Abstract of Japanese Patent Application No. 2023-183015 filed on October 25, 2023 are incorporated herein by reference in their entirety.

### REFERENCE SIGNS LIST

1 ··· appearance inspection device, 2 ···camera, 5 ···piston, 7 ···memory, 8 ··· inspection module

## Claims

1. A method of building a learning model to be used in an inspection device for inspecting for a defect in an object to be inspected, the method comprising:
generating an artificial defect based on a feature amount of the defect to be inspected for, a range of a feature amount for generating the artificial defect, and a distribution of the feature amount;
building a learning model which has learned the artificial defect;
acquiring, from an inspection of the object to be inspected using the learning model, a result indicating a non-detection of a defective product that is within a range of the feature amount of the defect or an over-detection of a non-defective product outside the range; and
reconstructing the learning model by updating the distribution based on the result.

2. The method of building a learning model according to claim 1, wherein the updating the distribution comprises increasing an amount of the artificial defects generated near a boundary of the feature amount.

3. The method of building a learning model according to claim 2, wherein the updating the distribution comprises updating a slope of the generated amount of the artificial defects relative to a change in the feature amount so that the amount of the artificial defects generated near the boundary of the feature amount increases.

4. The method of building a learning model according to claim 2, wherein the updating the distribution comprises updating the distribution so that the generated amount of the artificial defects is lower further away from the boundary of the feature amount.

5. The method of building a learning model according to claim 1, wherein the updating the distribution comprises increasing or decreasing a generated amount of the artificial defects for a specific feature amount based on the result so that the non-detection of the defective product or the over-detection of the non-defective product is reduced.

6. The method of building a learning model according to claim 2, wherein the updating the distribution comprises expanding or narrowing the range of the feature amount for generating the artificial defect based on the result so that the non-detection of the defective product or the over-detection of the non-defective product is reduced.

7. The method of building a learning model according to claim 6, wherein the updating the distribution includes expanding the range of the feature amount for generating the artificial defect to a non-defective product side.

8. The method of building a learning model according to claim 1,
wherein the learning model comprises a learning model to be used in an appearance inspection device,
wherein the artificial defect comprises an artificial defect image obtained by combining an image of an artificial defect with a non-defective product image, and
wherein the feature amount comprises at least one of a brightness, a size, or a shape of the image of the artificial defect.

9. An inspection device for inspecting for a defect in an object to be inspected by using a learning model, the inspection device being configured to use, as a method of building the learning model, the method of building a learning model of claim 1.

10. A method of building a learning model to be used in an inspection device for inspecting for, based on waveform data emitted by an object to be inspected, a fault in the object to be inspected, the method comprising:
generating an artificial fault waveform, which is waveform data obtained when an artificial fault occurs, based on a feature amount of the fault to be inspected for, a range of a feature amount for generating the artificial fault waveform, and a distribution of a generated amount of the artificial fault waveform relative to the feature amount within the range;
building a learning model which has learned the artificial fault waveform;
acquiring, from an inspection of the object to be inspected using the learning model, a result indicating a non-detection of a fault occurrence that is within a range of the feature amount of the artificial fault waveform or an over-detection of a non-fault outside the range; and
reconstructing the learning model by updating the distribution based on the result.
